# EUROPEAN PATENT APPLICATION

(11) **EP 1 742 453 A1**
(43) Date of publication of application: **10.01.2007**
(21) Application number: 05291470.2
(22) Date of filing: 06.07.2005
(51) Int. Cl.: H04M 3/52, H04M 3/493

(54) **Method and system for establishing a call in a telecommunications network**

(71) Applicant: ALCATEL, 75008 Paris (FR)
(72) Inventor: Hägebarth, Frank, 74366 Kirchheim (DE)
(74) Representative: LOUIS, PÖHLAU, LOHRENTZ

(57) **Abstract**

The invention concerns a method and a telecommunications system for establishing a telecommunication connection (220) through a telecommunication network (2). At an exchange (21 to 25) of the telecommunication network (2), a telephone number adressing a terminal of a called party is received from a terminal (10) of a calling party and a call is routed to an exchange (21 to 25) of the telecommunication network (2) associated with said telephone number. If it is detected at the exchange (21 to 25) of the telecommunication network (2) associated with said telephone number that the telephone number is not available, a number portability query message (205) is sent to a number portability data base (29). An announcement (208, 213) is sent to the terminal (10) of the calling party when receiving a reply (206) from the number portability data base (29) indicating that the telephone number is not ported. If the calling party approves it, a connection (220) between the terminal (10) of the calling party and a directory assistance service (30) is established.

## Description

The invention relates to a method and a system for establishing a telecommunication connection, in particular a telecommunication connection between a calling party and a directory assistance service.

When a telephone call over a voice telecommunication network is addressed to a non-valid telephone number (= TN), the calling party is informed about the wrong number by a signal tone and/or an announcement. The call is released and the calling party may hook the phone. If he wishes to start over but does not know the right TN, he may consult a telephone book before re-dialling. Alternatively, he may call the directory assistance ― if he knows its telephone number - and get notified about and possibly also put through to the right TN.

If the call fails to be established due to a non-existent number, the usage of the telecommunication network is free of charge. However, the directory assistance usually is subject to a charge imposed by the provider of the directory assistance service. In a liberalised telecommunications market, the provider of the directory assistance service needs not be identical with the provider of the telecommunication network.

Number portability (= NP) allows telephone subscribers in the Global Switched Telephone Network (= GSTN), also known as ISDN or PSTN, to keep their telephone number when they change their service provider (service provider portability) or subscribed services (service portability), or when they move to a new location (location portability) (ISDN = Integrated Services Digital Network; PSTN = Public Switched Telephone Network).

Request for Comments (= RFC) document 3482 maintained by the IETF (= Internet Engineering Task Force) provides an overview of the portability of E164 TNs, i.e., ordinary telephone numbers in the GSTN. Among other techniques, NP can be achieved by QoR (= Query on Release). In the QoR scheme, an originating network receives from a calling party a call addressed to a called party and routes the call to a so-called donor network, i.e., the telephone network where the called party's TN was originally issued. If the donor network releases the call and indicates that the dialled TN has been ported out of that switch, the release runs back towards the call origin up to a so-called trigger switch. From there, a NP service is addressed, e.g., by sending a query to a - centrally administered - number portability data base (= NPDB). The NP service returns information about the ported TN, e.g., a location routing number (= LRN) assigned to the switch currently hosting the ported dialled TN. The trigger switch uses this information to route the call to the called party.

It is the object of the present invention to provide an improved service on a telecommunications network.

The object of the present invention is achieved by a method of establishing a telecommunication connection through a telecommunication network, wherein the method comprises the steps of receiving, at an exchange of the telecommunication network, a telephone number adressing a terminal of a called party from a terminal of a calling party, routing a call to an exchange of the telecommunication network associated with said telephone number, detecting, at the exchange of the telecommunication network associated with said telephone number, whether the telephone number is available, sending a number portability query message to a number portability data base when the telephone number is not available at the exchange of the telecommunication network associated with said telephone number, sending an announcement to the terminal of the calling party when receiving a reply from the number portability data base indicating that the telephone number is not ported, establishing a connection between the terminal of the calling party and a directory assistance service when receiving an approving signal from the terminal of the calling party. The object of the present invention is further achieved by a telecommunication system for establishing a telecommunication connection through a telecommunication network, wherein the telecommunication system comprises an exchange having a call control unit adapted to trigger a server of the telecommunication network when detecting that a telphone number adressing a terminal of a called party is not available, wherein the telephone number is associated with a call routed from an exchange of the telecommunication network receiving said telephone number from a terminal of a calling party to an exchange of the telecommunication network associated with said telephone number, and a server with a control unit, wherein the control unit is adapted to send a number portability query message to a number portability data base when triggered by an exchange of the telecommunication network indicating that the telephone number is not available at the exchange of the telecommunication network associated with said telephone number, initiate the sending of an announcement to the terminal of the calling party when receiving a reply from the number portability data base indicating that the telephone number is not ported and initiate the establishment of a connection between the terminal of the calling party and a directory assistance service when receiving an approving signal from the terminal of the calling party.

Whereas in conventional voice telephony networks the network provider renders services in the case of a wrong dialled number without any compensation, the invention opens up a market where the network provider may gain revenues by offering assistance to the caller.

The invention provides a new service where all calls within a network that cannot be put through, particularly because they are directed to a wrong, non-existent TN, are routed to a fee-based directory assistence. If the calling party makes use of the services provided by the directory assistance, the provider of the directory assistance will deliver a part of the resulting revenues to the network provider for routing the call to the directory assistance. Alternatively, if the network provider and the provider of the directory assistance are identical, the revenues resulting from the directory assistance directly belong to the network provider.

The invention utilises the existent NP service with only small modifications to support the new service by taking over additional functions. Therefore, the effort to implement the new service is rather limited.

By means of the invention, the calling party is offered a convenient and ergonomic telephone service. He needs not remember the TN of the directory assistance and is offered prompt assistance when encountering a problem with a wrong TN of a called party.

Further advantages are achieved by the embodiments of the invention indicated by the dependent claims.

Preferably, a speech recognition based menu is presented at the calling party's terminal which enables the calling party to choose between sending an approving signal for accessing the directory assistance service and the termination of the call, if he does not wish to access the directory assistance service.

According to a preferred embodiment of the invention, the approving signal for accessing the directory assistance service may be transmitted from the terminal of the calling party to the control unit of the server by pressing a button of the terminal of the calling party. Alternatively, the calling party may dial a a specific number or dial a digit, if he uses a legacy telephone set with selector disk. According to another preferred embodiment of the invention, the control unit of the server may recognise an approving signal if the calling party holds the line, preferably for a relatively long time period such as five seconds. In both alternatives, the calling party must have been informed about the procedure how to access the directory assistance service, preferably by a voice announcement.

Preferably, the calling party is provided with a choice among two or more directory assistance services, whereby the calling party may select one of the two or more directory assistance services by pressing a button or dialling a digit on the terminal of the calling party or by voice entry of the calling party.

It is also possible that the two or more directory assistance services the calling party has to choose among cover different topics or issues such as local or distance calls. Also, the directory assistance services may provide different comfort levels and charge different fees. Preferably, the calling will be informed about the characteristics of the different directory assistance services by an announcement.

According to a preferred embodiment of the invention, the server registers the data of connections established to a specific directory assistance service. The data may comprise the TN of the calling party, the TN of the called party, time and date of call, used networks, etc. According to the registered data, especially the number of established connections, the provider of the telecommunication network establishing the connections to a specific directory assistance service may charge the provider of the directory assistance service for establishing connections to the directory assistance service.

Preferably, the server is not a dedicated hardware device. The server performing the service according to the invention may be implemented in already existent network element, such as a SCP of a SS7 network (SCP = Service Control Point; SS7 = Signalling System No. 7).

According to a preferred embodiment of the invention, the telecommunication system is used for forced default routing of calls. If a call addressed to a TN and routed via a telephone connection through a telecommunications network cannot be completed, e.g., because the TN does not exist, the TN was mistaken, the telephone connection is disordered, or any other reasons, the telecommunication system can be used to force the routing of the call to a predefined directory assistance service by default. The telecommunication system provides a service point whenever a connection does not work as expected, similar to an always accessible operator.

These as well as further features and advantages of the invention will be better appreciated by reading the following detailed description of presently preferred exemplary embodiments taken in conjunction with accompanying drawings of which:
- Fig. 1: is a block diagram of a system according to a first embodiment of the invention.
- Fig. 2: is a message sequence chart according to a first embodiment of the invention.
- Fig. 3: is a flow diagram according to a first embodiment of the invention.

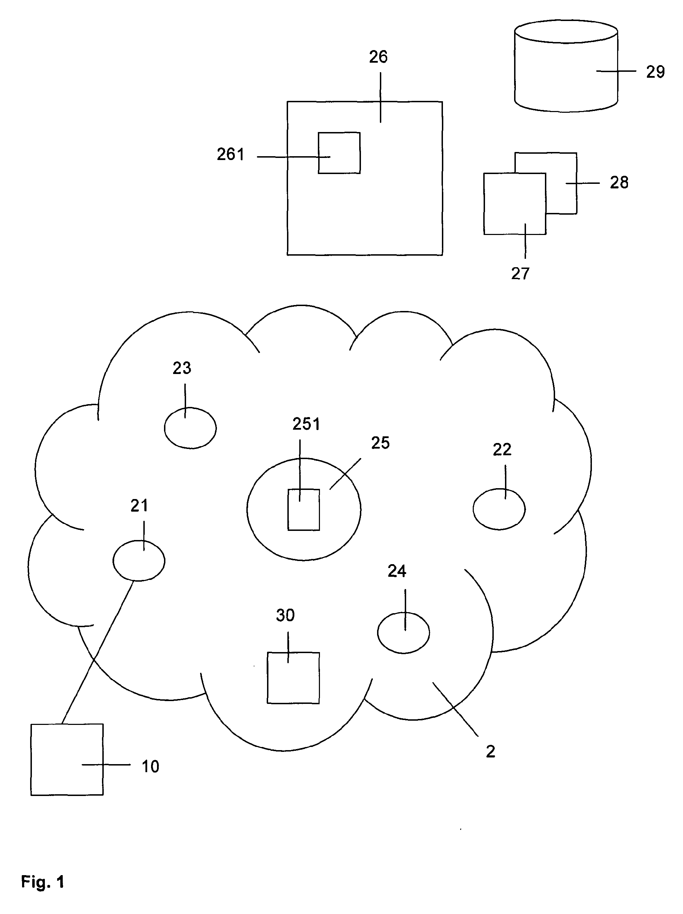

Fig. 1 shows a telephone terminal 10 of a calling party who is subscribed to a telephony service provided within a telecommunication network 2 of a telecommunication provider. The telephone terminal 10 is connected to the telecommunication network 2 via a subscriber line 101. The calling party wishes to communicate via the telecommunication network 2 with a called party who is also subscribed to the telephony service of the telecommunication network 2. The telecommunication network 2 may be part of the Global Switched Telephone telecommunication network (= GSTN). The telecommunication network 2 is a telephony network such as an ISDN or a PSTN network which supports NP. But, the telecommunication network 2 may be composed of several networks of different providers, in particular of several networks of different technology, such as fixed wireline telephony networks and wireless mobile telecommunication networks or IP based telecommunication networks (IP = Internet protocol).

The terminal 10 may be a classical telephone such as a PSTN terminal, ISDN terminal, or a mobile phone according to the GSM or UMTS standard (GSM = Global System for Mobile Communications; UMTS = Universal Mobile Telecommunications System).

The telecommunication network 2 comprises a multitude of exchanges 21 to 25. The exchanges 21 to 25 are network elements used for routing a call through the telecommunication network 2 and establishing a connection between two subscribers of a telephony service. The exchange 25 may serve as a kind of hub for at least a part of the network 2 and also comprises a call control unit 251.

Further, Fig. 1 shows a server 26 having a control unit 261, auxiliary units 27, 28 offering additional services within the telephony network 2, a NPDB 29, and a directory unit 30 providing a directory assistance service (NPDB = number portability data base). The units 26 to 30 may be comprised within the telecommunication network 2 or may be separate from the telecommunication network 2.

For example, the telecommunication network 2 is an IN network using the SS7 protocol or any other appropriate protocol (IN = Intelligent Network). The SS7 standard defines the procedures and protocol by which network elements in the PSTN exchange information over a digital signalling network to effect wireless (cellular) and wireline call setup, routing and control. In the SS7 architecture, the exchanges 21 to 24 represent ordinary switches that establish a connection for a call originating from the terminal 10 to the network 2 and from there step by step, exchange to exchange, through the network 2 to a destination terminal addressed by a TN. For example, the exchange 25 is a SSP, the server 26 is a SCP (SSP = Service Switching Point).

The exchange 25 is an exchange with enhanced functionality, at least partly supported by the call control unit 251. For example, the exchange 25 provides service switching functionalities. The exchange 25 may serve as an exchange, that performs specific tasks when triggered by a corresponding trigger event. The exchange 25 may communicate with the server 26 with regard to routing issues. For example, the exchange 25 may send a query message to the server 26 to determine how to route a call. The server 26 sends a response to the originating exchange 25 containing the routing number associated with the dialled number of the call.

The server 26 is constituted of one or several interlinked computers, a software platform and various application programs executed on the system platform provided by the aforementioned hardware and software platform. The functionalities of the server 26 are performed by the execution of these software components by the hardware components of the servicer 26, e.g., the control unit 261. Preferably, the server 26 according to the invention is installed as an independent network element.

However, it is also possible that the functionality of the server 26 is provided by one or more network elements of the telecommunication network 2 and that the server 26 is not existent as a physical hardware unit but only virtually in form of software running on the hardware units of the network 2.

The auxiliary units 27, 28 may be Intelligent Peripherals which enhance the IN functionality of the telephony network 2. For example, the auxiliary units 27, 28 may provide the telephony network 2 with service with regard to voice menus or voice recognition.

The directory unit 30 is a service unit where a telephony subcriber is assisted to find the TN and other data related to a subscriber of a telecommunication service. The directory unit 30 may be a call center where the directory assistance service is carried out by human operators or in an automated manner by means of computer servers, e.g., through voice menus, speech recognition, etc.

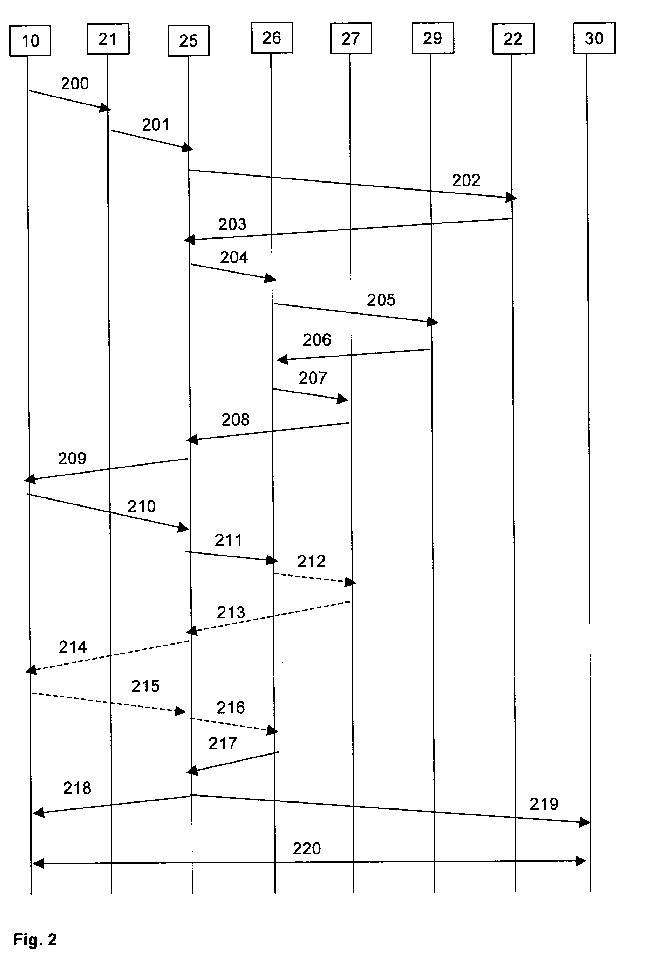

In the following, the exchange of messages in the telephony network 2 is exemplified by hand of Fig. 2.

Fig. 2 shows a message sequence chart, specifying the messages exchanged between the telephone terminal 10, the exchanges 21, 22, 25, the server 26, the auxiliary unit 27, and the NPDB 29. The exchange of the message is performed via the wireline or wireless telecommunication network 2 described by hand of Fig. 1.

The calling party uses his telephone terminal 10 to dial a TN and to initiate a call. The calling party assumes that the dialled TN is assigned to another subscriber of the telecommunication network 2 he wishes to communicate with. The dialled digits of the TN are transmitted as message 200 from the telephone terminal 10 of the calling party to the exchange 21 serving the calling party, the so-called originating exchange.

The originating exchange 21 realises by help of the digits of the dialled TN that the called subscriber is served by another exchange, i.e., is directed to a TN not served by the originating exchange 21, and transmits an initial address message (= IAM) 201 to reserve an idle trunk circuit from the originating exchange 21 to an intermediate switch, the exchange 25. The intermediate exchange 25 sends an ACM (= Address Complete Message) to acknowledge the circuit reservation request, identifies the destination exchange 22 of the call, and transmits an IAM 202 to reserve a trunk circuit to the destination exchange 22 of the call. In the example of Fig. 2, the IAMs 201, 202 are routed via the intermediate exchange 25 from the originating exchange 21 to the destination exchange 22.

Fig. 2 only shows the originating and the destination exchanges 21, 22, the intermediate exchange 25, and the exchanges 23, 24 not used in the establishment of the connection to simplify the drawing. However, the routing path between exchange 21 and exchange 22 may be along a plurality of exchanges of the network 2. The processes of sending IAM and ACM messages continues step by step from switch to switch until all trunks required to complete the voice circuit from the originating exchange 21 to the destination exchange 22 are reserved. The routing path may also run accross one or more network borders such that the originating exchange 21 and the destination exchange 22 belong to networks of different networks providers.

The destination exchange 22 examines the dialled number. It determines that it does not serve the dialled TN. According to the QoR scheme, the call is released by sending a release message 203, possibly comprising the release reason, to the exchange 25 which, in this example, serves as a trigger exchange which may be activated to this function by the release message 203. The call control unit 251 of the exchange 25 receives the release message 203 and triggers the server 26 for routing and portability information by sending a request 204. The control unit 261 of the server 26, which in the TN architecture may be a SCP, is triggered by the request 204 to send a query 205 to the NPDB 29. The query 205 is to check whether the dialled TN has been ported out of the exchange 22 to another switch of the network 2 (local number portability) or to another network (service provider portability).

The NP service of the network 2 is provided by means of the NPDB 29. According to the QoR scheme, if a dialled TN is not available at an anticipated switch, a network element may query the NPDB 29 whether the dialled TN has been ported out of that switch. If the dialled TN has in fact been ported, the NPDB 29 returns the porting information where the TN has been ported such as the routing number associated with the dialled TN to the triggering network element. The exchange 25 would then set up a call according to the porting information.

On the other hand, there are cases where the dialled TN has not been ported but simply does not exist because the calling party has dialled a wrong TN or the called party has signed off his line. This is the case the invention relates to. Consequently, the NPDB 29 determines that the dialled TN has not been ported, e.g., because the NPDB 29 is not able to find a porting information, and sends a corresponding message 206 to the switch that originated the query, here to the control unit 261 of the server 26.

As the TN is not available at the destination switch 22 and no porting information associated with the TN has been found in the NPDB 29, the call is considered to be wrong. At this point, instead of releasing the call back to the origin and providing the calling party from the origin with an announcement that the dialled TN does not exist, the control unit 261 of the server 26 triggers with message 207 the auxiliary unit 27 to deliver an announcement.

The announcement is sent as voice messages 208, 209 via the exchange 25 to the terminal 10 of the calling party. The announcement provides the calling party with a menu requesting to choose either to access a directory assistance unit 30 liable to charges or to terminate the call. If the calling party chooses to be forwarded to the directory assistance unit 30 by sending an approving message 210, the approving message is forwarded as message 211 from the exchange 25 to the control unit 261 of the server 26.

Triggered by the received approving message 211, the control unit 261 of the server 26 sends an initiation message 217 to the exchange 25 to initiate the establishment of a connection between the terminal 10 and the directory assistance unit 30. In the following step, the exchange 25 establishes a connection between the terminal 10 and the directory assistance unit 30 by setup messages 218, 219.

It is also possible that after sending the approving message 210, the calling party is provided with another voice message 214, which has been initiated through message 212 by the control unit 261 of the server 26 at the auxiliary unit 27 and sent as message 213 from the auxiliary unit 27 to the exchange 25 which forwarded the announcement as voice message 214 to the calling party.

The voice message 214 may be provided to the calling party, if there exists a choice among several providers of directory assistance service. The choice of the calling party is transmitted from the terminal 10 via the exchange 25 as messages 215, 216 to the control unit 261 of the server 216. As described above, the control unit 261 of the server 26 then sends an initiation message 217 to the exchange 25. Triggered by the initiation message 217, the exchange 25 transmits connection setup messages 218, 219 to the terminal 10 of the calling party and to the directory assistance unit 30 in order to establish a connection 220 between the terminal 10 of the calling party and the directory assistance unit 30 chosen by the calling party.

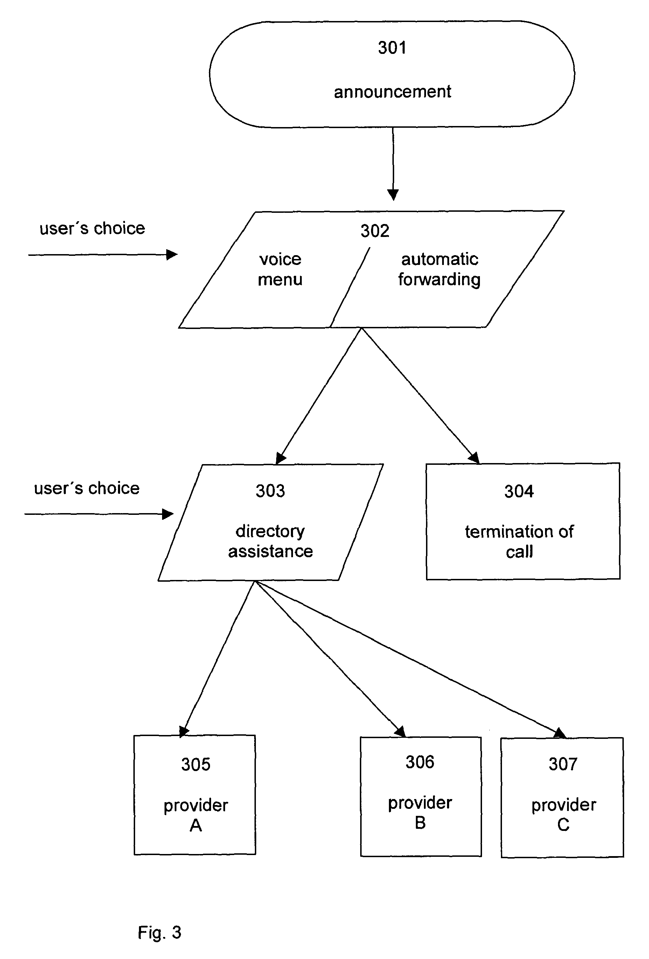

Fig. 3 is a flow diagram specifiying the possible steps of the announcements and related messages 208 to 219, shown in Fig. 2, as seen from the perspective of the calling party.

In a first step, the announcement 301 informs the calling party that the dialled TN does not exist. In a second step, the calling party is provided with a voice menu 302. The calling party is offered either the access to a directory assistance service 303 liable to charges or the termination 304 of the call by hooking the phone.

The calling party may signalise to the server 26, for example, by voice entry, pressing a specific key of his keypad, or by dialling a specific number or digit, that he wishes to be forwarded to the directory assistance service 303. Accordingly, the control unit 261 of the server 26 triggers that the calling party is forwarded to the directory assistance service 303.

Alternatively, the calling party may signalise to the server 26, for example, by voice entry, pressing a specific key of his keypad, or by dialling a specific number or digit, that he wishes the termination 304 of the call, i.e., that he wishes not to be forwarded to the directory assistance service 303. Accordingly, the control unit 261 of the server 26 triggers the termination 304 of the call. The calling party may also simply hook the telephone terminal 10 to terminate the call.

If the calling party indicates his approval to be forwarded to the directory assistance service 303, the control unit 261 of the server 26 may trigger the provision of another voice menu which offers the calling party to choose among two or more directory assistance services 305, 306, 307. The different directory assistance services 305, 306, 307 may be provided by different providers and/or cover different assistance topics such as white pages, yellow pages, local directory assistance, international directory assistance, etc. In reply to the voice menu, the calling party may signalise his choice, for example, by voice entry, pressing a specific key of his keypad, or by dialling a specific number or digit.

Finally, a telecommunication connection is established between the terminal 10 of the calling party and the chosen directory assistance 303, 305, 306, 307.

As alternative to the voice menu presented to the calling party, the calling party may be prompted by the announcement 301 either to hook the phone in order to terminate the process and call, respectively, or to hold the line in order to be automatically forwarded to the directory assistance service 303. In case the calling party holds the line, the establishment of a telecommunication connection between the terminal 10 of the calling party and the directory assistance 303 may be automatically performed after a short waiting period.

If the provider of the directory assistance 303, 305, 306, 307 is not identical with the provider of the telecommunication network 2, the control unit 261 of the server 26 may register how many forwardings to each directory assistance service 303, 305, 306, 307 have been performed by the provider of the telecommunication network 2. The number of performed forwardings to a specific directory assistance service 303, 305, 306, 307 may be the basis for a monetary compensation for the benefit of the provider of the forwarding telecommunication network 2. As the provider of the forwarding telecommunication network 2 supplies the provider of the directory assistance service 303, 305, 306, 307 with potential customers, he may demand a share of the revenues gained by the provider of the directory assistance service 303, 305, 306, 307 through the directory assistance service 303, 305, 306, 307.

## Claims

1. A method of establishing a telecommunication connection (220) through a telecommunication network (2), wherein the method comprises the steps of:
receiving, at an exchange (21 to 25) of the telecommunication network (2), a telephone number adressing a terminal of a called party from a terminal (10) of a calling party;
routing a call to an exchange (21 to 25) of the telecommunication network (2) associated with said telephone number;
detecting, at the exchange (21 to 25) of the telecommunication network (2) associated with said telephone number, whether the telephone number is available;
sending a number portability query message (205) to a number portability data base (29) when the telephone number is not available at the exchange (21 to 25) of the telecommunication network (2) associated with said telephone number;
sending an announcement (208, 213) to the terminal (10) of the calling party when receiving a reply (206) from the number portability data base (29) indicating that the telephone number is not ported; establishing a connection (220) between the terminal (10) of the calling party and a directory assistance service (30) when receiving an approving signal (210, 215) from the terminal (10) of the calling party.

2. The method of claim 1,
**characterised in**
**that** the method further comprises the step of:
providing the calling party with a speech recognition based menu (302) enabling the calling party to choose between sending an approving signal (210, 215) for accessing the directory assistance service (30, 303, 305 to 307) or terminating the call (304).

3. The method of claim 1,
**characterised in**
**that** the method further comprises the steps of:
sending an approving signal (210, 215) for accessing the directory assistance service (30, 303, 305 to 307) from the terminal (10) of the calling party by pressing a button of the terminal (10) of the calling party.

4. The method of claim 1,
**characterised in**
**that** the method further comprises the steps of:
sending an approving signal (210, 215) for accessing the directory assistance service (30, 303, 305 to 307) from the terminal (10) of the calling party by holding the line by the calling party.

5. The method of claim 1,
**characterised in**
**that** the method comprises the steps of:
providing the calling party with a choice among two or more directory assistance services (30, 303, 305 to 307);
selecting one of the two or more directory assistance services (30, 303, 305 to 307) by pressing a button of the terminal (10) of the calling party or by voice entry of the calling party.

6. The method of claim 5,
**characterised in**
**that** the two or more directory assistance services (30, 303, 305 to 307) cover different topics.

7. The method of claim 1,
**characterised in**
**that** the method further comprises the steps of:
registering data of connections (220) established to said directory assistance service (30, 303, 305 to 307);
charging the provider of the directory assistance service (30, 303, 305 to 307) for establishing connections (220) to the directory assistance service (30, 303, 305 to 307) based on said data of the connections (220).

8. A telecommunication system for establishing a telecommunication connection (220) through a telecommunication network (2), wherein the telecommunication system comprises an exchange (21 to 25) having a call control unit (251) adapted to trigger a server (26) of the telecommunication network (2) when detecting that a telephone number adressing a terminal of a called party is not available, wherein the telephone number is associated with a call routed from an exchange (21 to 25) of the telecommunication network (2) receiving said telephone number from a terminal (10) of a calling party to an exchange (21 to 25) of the telecommunication network (2) associated with said telephone number, and a server (26) with a control unit (261), wherein the control unit (261) is adapted to send a number portability query message (205) to a number portability data base (29) when triggered by said exchange (21 to 25) of the telecommunication network (2) directing that the telephone number is not available at the exchange (21 to 25) of the telecommunication network (2) associated with said telephone number, initiate the sending of an announcement (208, 213) to the terminal (10) of the calling party when receiving a reply (206) from the number portability data base (29) indicating that the telephone number is not ported and initiate the establishment of a connection (220) between the terminal (10) of the calling party and a directory assistance service (30, 303, 305 to 307) when receiving an approving signal (210, 215) from the terminal (10) of the calling party.

9. The telecommunication system of claim 8,
**characterised in**
**that** said server (26) is an IN service control node.

10. The telecommunication system of claim 8,
**characterised in**
**that** said exchange is an IN service switching node.
